# EUROPÄISCHE PATENTSCHRIFT

(11) **EP 3 911 852 B1**
(45) Veröffentlichungstag und Bekanntmachung des Hinweises auf die Patenterteilung: **26.02.2025**
(21) Anmeldenummer: 20715292.7
(22) Anmeldetag: 24.03.2020
(51) Int. Cl.: F02C 7/36, F01D 25/28

(54) **TRANSFEREINRICHTUNG FÜR EIN GETRIEBE UND VERFAHREN ZUM MONTIEREN EINES ALS PLANETENGETRIEBE AUSGEFÜHRTEN GETRIEBES**
TRANSFER DEVICE FOR A TRANSMISSION AND METHOD FOR MOUNTING A TRANSMISSION DESIGNED AS A PLANETARY TRANSMISSION
DISPOSITIF DE TRANSFERT POUR UNE BOÎTE DE VITESSES ET PROCÉDÉ DE MONTAGE D'UNE BOÎTE DE VITESSES CONÇUE SOUS LA FORME D'UNE BOÎTE DE VITESSES À TRAINS ÉPICYCLOÏDAUX

(30) Priorität: 30.03.2019 DE 102019002349
(43) Veröffentlichungstag der Anmeldung: 24.11.2021
(73) Patentinhaber: Aerospace Transmission Technologies GmbH, 88046 Friedrichshafen (DE)
(72) Erfinder: ACCIALINI, Nicola, 88046 Friedrichshafen (DE); SCHAUMANN, David, 88046 Friedrichshafen (DE)
(74) Vertreter: Zöschinger, Christian
(86) Internationale Anmeldenummer: PCT/EP2020/058044
(87) Internationale Veröffentlichungsnummer: WO 2020/200894

(56) Entgegenhaltungen:
- WO-A2-2014/197080
- US-A1- 2018 290 278

## Beschreibung

Die Erfindung betrifft eine Transfereinrichtung für ein Getriebe sowie ein Verfahren zum Montieren eines als Planetengetriebe ausgeführten Getriebes, insbesondere in Form eines Umlaufrädergetriebes für ein Flugzeugtriebwerk.

Aus WO 2013/151841 A1 ist es bekannt, einen Niederdruckkompressor einer Gasturbinenmaschine über ein Planetengetriebe in Differentialbauweise von einer Niederdruckturbine zu entkoppeln. Dabei ist das Planetengetriebe zusätzlich auch mit einem Bläser gekoppelt. Beispielsweise können die Niederdruckturbine mit einem Planetenträger des Planetengetriebes, der Niederdruckkompressor mit einem Sonnenrad des Planetengetriebes und der Bläser mit einem Hohlrad des Planetengetriebes gekoppelt sein.

Bei weiteren Flugtriebwerken ist es auch bekannt, dass eine der Wellen eines solchen Planetengetriebes gehäuseseitig festgelegt ist, während die beiden weiteren Wellen des Planetengetriebes mit Wellen des Flugtriebwerkes gekoppelt sind. Derartige Planetengetriebe sind üblicherweise ohne eigenes Gehäuse in Flugtriebwerken verbaut, weshalb diese nach der Montage und vor dem Einbau in ein Flugtriebwerk während der Lagerung und eines Transportes verschmutzen und korrodieren und auch beschädigt werden können. Des Weiteren ist ein Einbau solcher sogenannter offener Getriebe in Gasturbinentriebwerken und dergleichen durch einen hohen Handhabungsaufwand gekennzeichnet, was den Einbau in unerwünschtem Umfang erschwert.

Aus der US 2018 290 278 A1 kennt man bereits eine Vorrichtung zur Installation eines Ringes eines Planetengetriebes, das ein Sonnenrad, Planetenräder, einen Planetenradträger und ein Hohlrad umfasst.

Die WO 2014 197 080 A2 beschreibt ein Verfahren zur Montage eines Turbofanmotors und einen Turbofanmotor, wobei auch ein Planetengetriebe vorgesehen sein kann.

Der vorliegenden Erfindung liegt die Aufgabe zugrunde, Lösungen aufzuzeigen, durch welche sich für die Handhabung einer Getriebebaugruppe und deren Einbindung in ein Triebwerk Vorteile gegenüber herkömmlichen Herangehensweisen ergeben.

Diese Aufgabe wird gemäß einem ersten Aspekt der vorliegenden Erfindung gelöst durch eine Transfereinrichtung zur Handhabung eines Getriebes für ein Triebwerk, wobei dieses Getriebe ein Hohlrad, Planetenräder, einen Planetenträger und ein Sonnenrad umfasst, mit:
- einer Fixiereinrichtung, die mit dem Hohlrad, dem Planetenträger und dem Sonnenrad koppelbar ist, derart dass das Getriebe über die Fixiereinrichtung transferierbar ist und
- einer Spannmechanik, die in die Fixiereinrichtung eingebunden ist, wobei
- über die Spannmechanik das Getriebe in einen verspannten Zustand bringbar ist.

Dadurch wird es auf vorteilhafte Weise möglich, ein Getriebe für ein Flugzeugtriebwerk zu einer Baugruppe zusammenzufassen und hierbei die Zahnräder in einen Last-Zustand zu bringen, in welchem in den Zonen des gegenseitigen Eingriffs kein Flankenspiel vorherrscht.

Erfindungsgemäß ist vorgesehen, dass die Fixiereinrichtung ein Gehäuse bildet, mit einem ersten Gehäuseteil und mindestens einem damit verbindbaren zweiten Gehäuseteil, wobei wenigstens das erste Gehäuseteil mit Mitteln zum Arretieren des Getriebes im ersten Gehäuseteil in axialer Richtung des ersten Gehäuseteiles und zum drehfesten Verbinden von zumindest einem Bauteil des Getriebes mit dem ersten Gehäuseteil ausgeführt ist, wobei das erste Gehäuseteil zusätzlich mindestens einen Montagebereich aufweist, über den das erste Gehäuseteil während einer Montage zusammen mit dem Getriebe mittels einer Hebeeinrichtung handhabbar ist

Die Fixiereinrichtung bildet somit gemäß der vorliegenden Erfindung ein Interimsgehäuse für das Getriebe, insbesondere ein Planetengetriebe eines Flugtriebwerkes. Dieses Gehäuse setzt sich aus einem ersten Gehäuseteil und mindestens einem damit verbindbaren zweiten Gehäuseteil zusammen. Die Fixiereinrichtung kann hierbei ausschließlich durch eine in eines der beiden Gehäuseteile eingebundene Mechanik realisiert werden.

Mittels des Gehäuses sind ein Verschmutzen und Korrosion des Getriebes während der Lagerung und während eines Transportes auf einfache Art und Weise vermeidbar. Zusätzlich werden auch Beschädigungen an Bauteilen des Getriebes vor dem Einbau in einen Antriebsstrang mit geringem Aufwand vermieden, da die Bauteile des Getriebes sowohl in axialer Richtung als auch in radialer Richtung mit dem Gehäuse verbunden und in diesem arretiert sind. Über dieses Arretieren werden beispielsweise durch Vibrationen ausgelöste Bewegungen der Bauteile des Getriebes relativ zueinander und auch relativ zu den Gehäuseteilen unterbunden. Dies ist von Vorteil, da Relativbewegungen zwischen den Bauteilen und auch zwischen den Bauteilen und den Gehäuseteilen jeweils ein unerwünschtes schlagartiges Aufeinandertreffen im Bereich von Bauteiloberflächen und Gehäuseoberflächen verursachen können, welches unerwünschte Beeinträchtigungen der Bauteile des Getriebes zur Folge haben kann.

Des Weiteren weist das erste Gehäuseteil zusätzlich mindestens einen Montagebereich auf, über den das erste Gehäuseteil während einer Montage zusammen mit dem Getriebe mittels einer Hebeeinrichtung handhabbar ist. Damit ist ein Montageaufwand auf konstruktiv einfache Art und Weise im Vergleich zu offenen Getrieben reduziert, die ohne Gehäuse montiert werden.

Vorliegend werden unter dem Begriff Montagebereich unter anderem in geeigneter Weise ausgebildete Außenflächen des ersten Gehäuseteiles, an welchen Greifwerkzeuge einer Hebeeinrichtung zum Verlagern des ersten Gehäuseteiles und des damit verbundenen Getriebes anlegbar sind, oder außen am ersten Gehäuseteil vorgesehene Hakenbereiche oder ösenartige Bereiche des ersten Gehäusesteiles subsumiert, in die Werkzeuge einer Hebeeinrichtung zur Handhabung des ersten Gehäuseteils und des Getriebes einhängbar sind. Des Weiteren kann der Montagebereich auch eine Innenfläche des ersten Gehäuseteils umfassen bzw. zumindest teilweise durch eine Innenfläche gebildet sein.

Dabei ist das Gehäuse vorzugsweise für verschiedene Getriebebauarten bzw. unterschiedlichste Planetengetriebebauarten geeignet. Insbesondere ist das Gehäuse als Gehäuse für Planetengetriebe für Flugtriebwerke, wie Stahltriebwerke, Propellerturbinenluftstrahltriebwerke, sogenannte Open-Rotor-Konzepte und dergleichen verwendbar.

Somit betrifft die Erfindung auch ein Gehäuse für ein Getriebe mit einem ersten Gehäuseteil und mindestens einem damit verbindbaren zweiten Gehäuseteil, dadurch gekennzeichnet, dass wenigstens das erste Gehäuseteil mit Mitteln zum Arretieren des Getriebes im ersten Gehäuseteil in axialer Richtung des ersten Gehäuseteiles und zum drehfesten Verbinden von zumindest einem Bauteil des Getriebes mit dem ersten Gehäuseteil ausgeführt ist, wobei das erste Gehäuseteil zusätzlich mindestens einen Montagebereich aufweist, über den das erste Gehäuseteil während einer Montage zusammen mit dem Getriebe mittels einer Hebeeinrichtung handhabbar ist.

Vorzugsweise umfasst zumindest das erste Gehäuseteil axiale Anlageflächen für die Bauteile des Getriebes, und das Getriebe ist auf einfache Art und Weise im Gehäuse arretierbar.

Gemäß einem weiteren Aspekt der vorliegenden Offenbarung umfasst wenigstens ein Mittel zum axialen Arretieren des Getriebes im ersten Gehäuseteil eine doppeltwirkende Kolben-Zylinder-Einheit. Dabei ist ein Kolben oder ein Zylinder der Kolben-Zylinder-Einheit sowohl translatorisch als auch rotatorisch gegenüber dem Zylinder oder gegenüber dem Kolben bewegbar ausgeführt und weist ein mit dem Zylinder oder dem Kolben verbundenes Spannelement auf. Das Spannelement ist mit wenigstens einem der Bauteile des Getriebes in Wirkverbindung bringbar, wobei das wenigstens eine Bauteil des Getriebes über das Spannelement gegen eine der axialen Anlageflächen des ersten Gehäuseteils drückbar ist.

Damit besteht auf einfache Art und Weise die Möglichkeit, das Getriebe in das erste Gehäuseteil einzusetzen und anschließend durch entsprechende Betätigung der Kolben-Zylinder-Einheit im ersten Gehäuseteil in gewünschtem Umfang ohne zusätzlichen Montageaufwand in axialer Richtung zu arretieren.

Bei einer weiteren Ausführungsform des Gehäuses gemäß der vorliegenden Offenbarung umfasst wenigstens ein Mittel zum radialen Arretieren des Getriebes im ersten Gehäuseteil eine doppeltwirkende Kolben-Zylinder-Einrichtung. Ein Kolben oder ein Zylinder der Kolben-Zylinder-Einrichtung ist rotatorisch gegenüber dem Zylinder oder gegenüber dem Kolben bewegbar ausgeführt. Des Weiteren weist die Kolben-Zylinder-Einrichtung ein mit dem Zylinder oder dem Kolben verbundenes Spannelement auf, das mit einem Bauteil des Getriebes über eine Verzahnung in Wirkverbindung bringbar ist und über das das Getriebe gegen ein Haltelement des ersten Gehäuseteils rotatorisch vorspannbar ist.

Damit ist das Getriebe im ersten Gehäuseteil wiederum mit geringem Montageaufwand in radialer Richtung im Gehäuseteil arretierbar, um Beschädigungen an den Bauteilen des Getriebes in gewünschtem Umfang zu vermeiden.

Zusätzlich kann das Spannelement des Mittels zum radialen Arretieren des Getriebes im ersten Gehäuseteil einen Gewindebereich umfassen, auf den eine Spannmutter aufschraubbar ist. Dann besteht auf einfache Art und Weise die Möglichkeit, das Bauteil des Getriebes, das mit dem Spannelement in Wirkverbindung bringbar ist, über die Spannmutter axial im ersten Gehäuseteil zu arretieren.

Ist wenigstens eines der Gehäuseteile mit wenigstens einem durchsichtigen Bereich ausgebildet, ist beispielsweise eine auf dem Getriebe angebrachte Seriennummer oder ein Ölstand im Gehäuse auf einfache Art und Weise erkennbar.

Gemäß einem weiteren Aspekt der vorliegenden Offenbarung ist wenigstens eines der Gehäuseteile mit wenigstens einer verschließbaren Öffnung ausgebildet und zwischen den Gehäuseteilen zumindest eine Dichtung vorgesehen.

Dann ist das Gehäuseinnere des erfindungsgemäßen Gehäuses auf einfache Art und Weise mit einem einen Korrosionsschutz für das Getriebe bietenden Medium, wie Öl oder dergleichen, nach der Montage des Getriebes befüllbar. Zusätzlich ist das anti-korrosive Medium vor der Demontage des Gehäuses vom Getriebe über die wenigstens eine Öffnung ablassbar. Über die Dichtung zwischen den Gehäuseteilen wird ein unerwünschtes Austreten des Mediums aus dem Gehäuseinneren in gewünschtem Umfang vermieden.

Alternativ hierzu besteht auch die Möglichkeit, im Inneren der Gehäuseteile eine Opferanode z.B. in Form einer Beschichtung der Innenseiten der Gehäuseteile und/oder eines schaumartigen Materials und/oder in Form von dünnen Blechen und/oder Folien als Korrosionsschutz vorzusehen. Diese Ausführung des Gehäuses bietet im Vergleich zur Befüllung des Gehäuses mit einem antikorrosiven Medium den Vorteil, dass ein das Gehäuse und das Getriebe umfassendes Modul dann durch ein geringeres Gesamtgewicht gekennzeichnet ist.

Zusätzlich ist auch ein wiederholtes Mischen des Öls im Inneren des Gehäuses nicht erforderlich, um Konzentrationsunterschiede im Öl zu vermeiden, die sich während längerer Standzeiten einstellen.

Des Weiteren ist dann auch vor der Demontage des Gehäuses kein Öl aus dem Gehäuse abzulassen, womit eine Handhabung gegenüber einem Korrosionsschutz mittels Öl oder dergleichen vereinfacht ist. Darüber hinaus stellt der Korrosionsschutz über eine Opferanode auch eine umweltverträglichere Lösung dar.

Sind die Kolben-Zylinder-Einheiten und die Kolben-Zylinder-Einrichtung hydraulisch, pneumatisch oder elektromechanisch betätigbar, ist das Getriebe auf einfache Art und Weise im Wesentlichen automatisiert im Gehäuse arretierbar.

Sind die Kolben-Zylinder-Einheiten und die Kolben-Zylinder-Einrichtung über eine gemeinsame Steuereinheit aufeinander abgestimmt betätigbar, ist die Arretierung des Getriebes im Gehäuse mit geringem Steuer und Regelaufwand realisierbar.

Bei einer weiteren vorteilhaften Ausführungsform des Gehäuses gemäß der vorliegenden Offenbarung weist zumindest das erste Gehäuseteil Aufnahmebereiche auf, in deren Bereich Feder-Dämpfer-Einheiten einenends am ersten Gehäuseteil befestigbar sind, die anderenends mit einer Transporteinrichtung verbindbar sind. Dadurch sind am Gehäuse und am Getriebe während einer Lagerung bzw. während eines Transports angreifende Vibrationen dämpfbar.

Dabei wird die Steifigkeit der Feder-Dämpfer-Einheiten in Abhängigkeit der Gewichtskräfte ausgelegt, die jeweils an dem aus dem Gehäuse und dem Getriebe bestehenden Modul angreifen.

Bei weiteren Ausführungsformen des erfindungsgemäßen Gehäuses ist wenigstens eine Sensoreinheit zur Bestimmung einer Temperatur und/oder einer Luftfeuchtigkeit und/oder einer am Getriebe angreifenden Beschleunigung und/oder eines Aufenthaltsortes des Getriebes umfasst. Insbesondere über einen Temperatur- und/oder Feuchtigkeitssensor besteht die Möglichkeit, eine Korrosion des Getriebes begünstigende Betriebsbedingungen zu erkennen und entsprechende Gegenmaßnahmen zu ergreifen.

Gemäß einem weiteren Aspekt der vorliegenden Offenbarung wird ein Verfahren zum Montieren eines als Planetengetriebe ausgeführten Getriebes bereitgestellt, das in einem vorstehend näher erläuterten Gehäuse angeordnet ist. Dabei betrifft das Verfahren unter anderem eine Vorgehensweise zum Montieren des Getriebes in ein vorzugsweise vertikal angeordnetes Flugtriebwerk. Erfindungsgemäß wird hierbei das Getriebe gemeinsam mit der Fixiereinrichtung aufgegriffen und durch Handhabung der Fixiereinrichtung in das Flugtriebwerk eingesetzt.

Zur Montage des Getriebes in das Flugtriebwerk werden zunächst das zweite Gehäuseteil vom ersten Gehäuseteil sowie die Spannmutter vom Spannmittel des Mittels zum radialen Arretieren des Getriebes im ersten Gehäuseteil abgebaut. Daran anschließend wird das Mittel zum radialen Arretieren des Getriebes im ersten Gehäuseteil demontiert. Wiederum daran anschließend wird ein als drehbare Welle ausgebildetes Bauteil des Getriebes durch vorzugsweise vertikales Einführen des Getriebes mit dem ersten Gehäuseteil mit einer Welle des Flugtriebwerkes in Wirkverbindung gebracht.

Bei einer vorteilhaften Variante des erfindungsgemäßen Verfahrens wird das erste Gehäuseteil vom Getriebe demontiert, wenn das Getriebe im Flugtriebwerk angeordnet ist und die axiale Arretierung des Getriebes im ersten Gehäuseteil gelöst ist.

Die vorliegende Erfindung befasst sich mit der Zusammenfassung der Zahnradbaugruppe eines Triebwerksgetriebes zu einer lager- und transportfähigen Einheit. Es wird dort eine Aufnahmestruktur für das Triebwerksgetriebe geschaffen auf welcher das Triebwerksgetriebe abgelegt und fixiert werden kann. Zudem erfolgt die Fixierung des Triebwerksgetriebes derart, dass hierbei das Getriebe verspannt wird und hierbei das Flankenspiel in den Zahneingriffsbereichen beseitigt wird, so dass im Falle etwaiger Stöße die Zahnradflanken nicht signifikant stoßartig belastet werden.

Die zur Aufnahme des Triebwerksgetriebes vorgesehene Anordnung ist vorzugsweise so ausgelegt, dass diese eine Gehäusefunktion bietet. Durch diese Gehäusefunktion wird das Triebwerksgetriebe von der Umgebung abgeschottet. Die Gehäusefunktion kann dazu herangezogen werden, das Triebwerksgetriebe in einer Schutzatmosphäre und/oder in einem viskosen Medium, insbesondere Öl unterzubringen. Die Anordnung zur Aufnahme des Triebwerksgetriebes ist vorzugsweise mehrteilig ausgeführt und umfasst hierbei wiederum vorzugsweise eine Baugruppe, die als Handhabungsstruktur fungiert und es ermöglicht das Triebwerksgetriebe in eine Einbauposition zu transferieren und nach Einsetzen in ein Triebwerk freizugeben. Die Anordnung biete auch die Möglichkeit, das Triebwerksgetriebe oder zumindest eine Zahnradbaugruppe desselben zunächst in einer ersten Position oder Ausrichtung zu lagern, die von jener Position oder Ausrichtung in welcher das Getriebe in das Triebwerk eingefügt wird, abweicht. Alle Komponenten der Baugruppe werden dabei durch die Anordnung als Gruppe zusammengehalten und gemeinsam in Einbaustellung verbracht. Die Anordnung kann hierbei auch so ausgelegt sein, dass diese als Demontagehilfe verwendet wird, d.h. dass diese zur Demontage des Getriebes von einem Triebwerk verwendet wird. Damit wird es möglich das Getriebe als Baugruppe aus dem Treibwerk auszuheben und in fixiertem Zustand weiter handzuhaben.

Nach einem weiteren Aspekt der vorliegenden Erfindung wird für das in einer vorzugsweise gehäuseartigen Fixieranordnung gelagerte Triebwerksgetriebe eine Transportbox bereitgestellt, durch welche das Getriebe unter Einschluss der Fixieranordnung nachgiebig abgestützt transportiert werden kann. Hierzu sind in die Transportbox Lager- oder Aufhängungsstrukturen eingebunden, die eine Verlagerung des Triebwerksgetriebes gegenüber der Transportbox in wenigstens eine Raumrichtung ermöglichen. Vorzugsweise ist das Triebwerksgetriebe in der Transportbox in vertikaler Richtung nachgiebig gelagert, sowie zudem horizontal in zwei zueinander quer verlaufende Raumrichtungen ebenfalls nachgiebig gelagert oder aufgehängt.

Das Triebwerksgetriebe kann weiterhin in der Transportbox auch so gelagert sein, dass dieses für einen begrenzten Winkelbereich um wenigstens eine, vorzugsweise drei zueinander quer verlaufenden Achsen gegen eine Rückstellkraft schwenkbar ist.

Die unter Einschluss der der Transportbox gebildete Transfereinheit kann weiterhin Sensoren oder Erfassungs- und Aufzeichnungsorgane umfassen, durch welche etwaige Beschleunigungen des Triebwerksgetriebes während der Einlagerung oder des Transports oder seiner Bereitstellung erfasst und dokumentiert werden.

Die Fixieranordnung zur Fixierung des Triebwerksgetriebes in verspanntem Zustand kann eine Gehäusestruktur bilden, oder in ein vorzugsweise mehrteiliges Gehäuse eingesetzt werden.

Die Erfindung betrifft weiterhin ein Gehäuse für ein Getriebe mit einem ersten Gehäuseteil und mindestens einem damit verbindbaren zweiten Gehäuseteil, dadurch gekennzeichnet, dass wenigstens das erste Gehäuseteil mit Mitteln zum Arretieren des Getriebes im ersten Gehäuseteil in axialer Richtung des ersten Gehäuseteiles und zum drehfesten Verbinden von zumindest einem Bauteil des Getriebes mit dem ersten Gehäuseteil ausgeführt ist, wobei wenigstens ein Spannelement vorhanden ist, das mit einem Bauteil des Getriebes über eine Verzahnung in Wirkverbindung bringbar ist und über das das Getriebe gegen ein Haltelement des ersten Gehäuseteils und/oder gegen das erste Gehäuseteil rotatorisch vorspannbar ist.

Die vorstehenden Vorteile gelten hierbei sofern technisch sinnvoll in analoger Weise. Weiterbildungen gemäß vorstehenden Ausführungen können, sofern technisch sinnvoll, entsprechend erfolgen.

Im Sinne der Erfindung kann ein Gehäuse als Transfereinrichtung aufgefasst und beschrieben werden. Eine Transfereinrichtung kann im Sinne der Erfindung ein Gehäuse umfassen.

Im Sinne der Erfindung kann ein Spannelement als Fixiereinrichtung aufgefasst und beschrieben werden.

Das erste Gehäuseteil kann im Sinne der Erfindung als Fixiereinrichtung bzw. als Spannelement ausgebildet sein oder umfassen.

Es werden nun beispielhaft Ausführungsformen mit Bezug auf die Figuren beschrieben. Es zeigt/zeigen:
- Figur 1: eine Längsschnittansicht zur Veranschaulichung des Aufbaus eines Gasturbinentriebwerks das ein Triebwerksgetriebe umfasst;
- Figur 2: eine vergrößerte Teillängsschnittansicht eines stromaufwärtigen Abschnitts eines Gasturbinentriebwerks;
- Figur 3: eine vereinfachte Alleindarstellung eines Getriebes
- Figur 4: für ein Gasturbinentriebwerk; eine vereinfachte dreidimensionale Schnittansicht eines als Fixierstruktur fungierenden Gehäuses und eines darin angeordneten Planetengetriebes;
- Figur 5: eine vergrößerte Ansicht eines in Figur 4 näher gekennzeichneten Bereiches V;
- Figur 6: eine vergrößerte Ansicht eines in Figur 4 näher gekennzeichneten Bereiches VI;
- Figur 7: eine vergrößerte Ansicht eines in Figur 6 näher gekennzeichneten Bereiches VII;
- Figuren 8a bis 8c: Verschiedene, vereinfachte und schematisierte Ansichten des als Fixier- und Transferstruktur fungierenden Gehäuses und des Planetengetriebes während einer Montage des Getriebes in ein senkrecht angeordnetes Flugtriebwerk;
- Figur 9: eine perspektivische Darstellung einer, eine Transportbox für das Transfergehäuse umfassenden Transferanordnung für ein Triebwerksgetriebe;
- Figur 10: eine Seitenansicht der Transportbox nach Figur 9, zur weiteren Veranschaulichung der nachgiebigen Lagerung des mit dieser Transportbox in verspanntem Zustand und zugleich eingehaust transferierbaren Triebwerksgetriebes;
- Figur 11: eine perspektivische Darstellung der als Gehäuse fungierenden Anordnung, zur Verspannung des Triebwerksgetriebes und zum Einsetzen desselben in ein Triebwerk;
- Figur 12a: eine Schnittdarstellung, zur Veranschaulichung des Aufbaus der Fixiereinrichtung, die auch als Gehäuse fungieren kann;
- Figur 12b: eine Detaildarstellung, zur Veranschaulichung des Aufbaus der Spannmechanik zum Tordieren des Sonnenrades;
- Figur 13: eine Draufsicht auf die Fixiereinrichtung nach Figur 12, zur Veranschaulichung der Lage der ausgreifenden Strukturen;
- Figur 14: eine Schnittdarstellung zur Veranschaulichung der unter Einschluss des eingehausten Triebwerksgetriebes, des Transfergehäuses und der Transportbox gebildeten Transfereinheit;
- Figur 15a: eine perspektivische Darstellung der Transportbox nach Figur 9 mit darin aufgenommenem und vollständig eingehaustem Triebwerksgetriebe;
- Figur 15b: eine Draufsicht auf die Transportbox nach Figur 15a mit dem eingehaust gelagerten und in sich verspannten Triebwerksgetriebe;
- Figur 16: eine Schemadarstellung der erfindungsgemäßen Transferanordnung zur Erläuterung weiterer konzeptioneller Merkmale derselben.

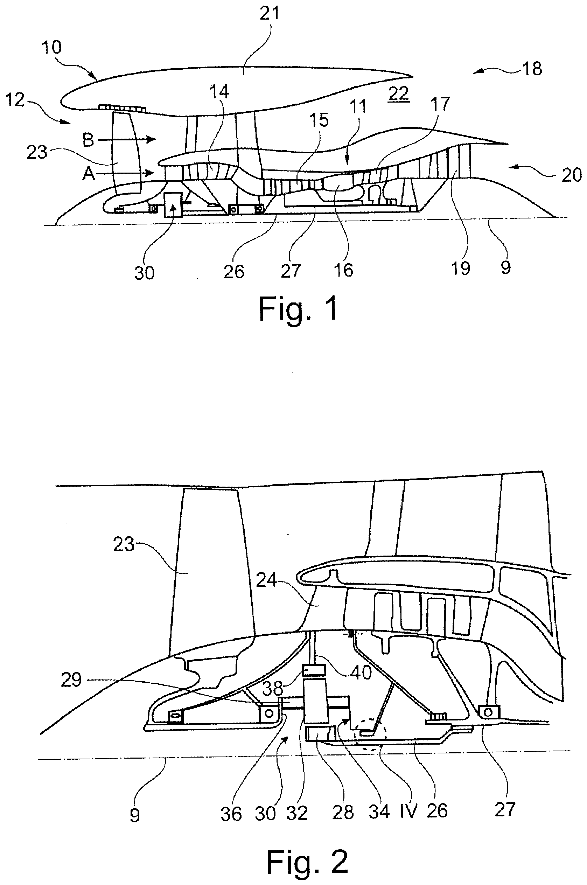

Figur 1 zeigt ein Gasturbinentriebwerk 10 mit einer Hauptdrehachse 9. Das Triebwerk 10 umfasst einen Lufteinlass 12 und ein Schubgebläse 23, das zwei Luftströme erzeugt: einen Kernluftstrom A und einen Bypassluftstrom B. Das Gasturbinentriebwerk 10 umfasst einen Kern 11, der den Kernluftstrom A aufnimmt. Der Triebwerkskern 11 umfasst in Axialströmungsreihenfolge einen Niederdruckverdichter 14, einen Hochdruckverdichter 15, eine Verbrennungseinrichtung 16, eine Hochdruckturbine 17, eine Niederdruckturbine 19 und eine Kernschubdüse 20. Eine Triebwerksgondel 21 umgibt das Gasturbinentriebwerk 10 und definiert einen Bypasskanal 22 und eine Bypassschubdüse 18. Der Bypassluftstrom B strömt durch den Bypasskanal 22. Das Gebläse 23 ist über eine Welle 26 und ein Epizykloidengetriebe 30 an der Niederdruckturbine 19 angebracht und wird durch diese angetrieben. Dabei wird die Welle 26 auch als Kernwelle bezeichnet.

Im Gebrauch wird der Kernluftstrom A durch den Niederdruckverdichter 14 beschleunigt und verdichtet und in den Hochdruckverdichter 15 geleitet, wo eine weitere Verdichtung erfolgt. Die aus dem Hochdruckverdichter 15 ausgestoßene verdichtete Luft wird in die Verbrennungseinrichtung 16 geleitet, wo sie mit Kraftstoff vermischt wird und das Gemisch verbrannt wird. Die resultierenden heißen Verbrennungsprodukte breiten sich dann durch die Hochdruck und die Niederdruckturbine 17, 19 aus und Trieben diese dadurch an, bevor sie zur Bereitstellung einer gewissen Schubkraft durch die Düse 20 ausgestoßen werden. Die Hochdruckturbine 17 treibt den Hochdruckverdichter 15 durch eine geeignete Verbindungswelle 27 an, die auch als Kernwelle bezeichnet wird. Das Gebläse 23 stellt allgemein den Hauptteil der Schubkraft bereit. Das Epizykloidengetriebe 30 ist ein Untersetzungsgetriebe.

Eine beispielhafte Anordnung für ein Getriebegebläse-Gasturbinentriebwerk 10 wird in Figur 2 gezeigt. Die Niederdruckturbine 19 (siehe Figur 1) Treibt die Welle 26 an, die mit einem Sonnenrad 28 der Epizykloidengetriebeanordnung 30 gekoppelt ist. Mehrere Planetenräder 32, die durch einen Planetenträger 34 miteinander gekoppelt sind, befinden sich von dem Sonnenrad 28 radial außen und kämmen damit und sind jeweils drehbar auf drehfest mit dem Planetenträger 34 verbundenen Trägerelementen 29 angeordnet. Der Planetenträger 34 beschränkt die Planetenräder 32 darauf, synchron um das Sonnenrad 28 zu kreisen, während er ermöglicht, dass sich jedes Planetenrad 32 auf den Trägerelementen 29 um seine eigene Achse drehen kann. Der Planetenträger 34 ist über Gestänge 36 mit dem Gebläse 23 dahingehend gekoppelt, seine Drehung um die Triebwerksachse 9 anzutreiben. Ein Aussenrad oder Hohlrad 38, das über Gestänge 40 mit einer stationären Stützstruktur 24 gekoppelt ist, befindet sich von den Planetenrädern 32 radial außen und kämmt damit.

Es wird angemerkt, dass die Begriffe "Niederdruckturbine" und "Niederdruckverdichter", so wie sie hier verwendet werden, so aufgefasst werden können, dass sie die Turbinenstufe mit dem niedrigsten Druck bzw. die Verdichterstufe mit dem niedrigsten Druck (d. h. dass sie nicht das Gebläse 23 umfassen) und/oder die Turbinen und Verdichterstufe, die durch die Verbindungswelle 26 mit der niedrigsten Drehzahl in dem Triebwerk (d. h. dass sie nicht die Getriebeausgangswelle, die das Gebläse 23 antreibt, umfasst) miteinander verbunden sind, bedeuten. In einigen Schriften können die "Niederdruckturbine" und der "Niederdruckverdichter", auf die hier Bezug genommen wird, alternativ dazu als die "Mitteldruckturbine" und "Mitteldruckverdichter" bekannt sein. Bei der Verwendung derartiger alternativer Nomenklatur kann das Gebläse 23 als eine erste Verdichtungsstufe oder Verdichtungsstufe mit dem niedrigsten Druck bezeichnet werden.

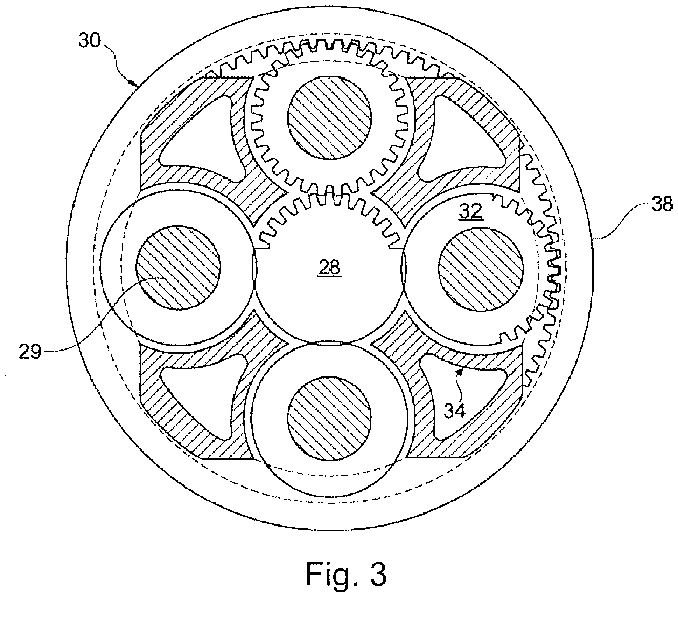

Das Epizykloidengetriebe 30 wird in Figur 3 beispielhaft genauer gezeigt. Das Sonnenrad 28, die Planetenräder 32 und das Hohlrad 38 umfassen jeweils Zähne um ihre Peripherie zum Kämmen mit den anderen Zahnrädern. Jedoch werden der Übersichtlichkeit halber lediglich beispielhafte Abschnitte der Zähne in Fig. 3 dargestellt. Obgleich vier Planetenräder 32 dargestellt werden, liegt für den Fachmann auf der Hand, dass innerhalb des Schutzumfangs der beanspruchten Erfindung mehr oder weniger Planetenräder 32 vorgesehen sein können. Praktische Anwendungen eines Epizykloidengetriebes 30 umfassen allgemein mindestens drei Planetenräder 32.

Das in den Figuren 2 und 3 beispielhaft dargestellte Epizykloidengetriebe 30 ist ein Planetengetriebe, bei dem der Planetenträger 34 über Gestänge 36 mit einer Ausgangswelle gekoppelt ist, wobei das Hohlrad 38 festgelegt ist. Jedoch kann eine beliebige andere geeignete Art von Epizykloidengetriebe 30 verwendet werden. Als ein weiteres Beispiel kann das Epizykloidengetriebe 30 eine Sternanordnung sein, bei der der Planetenträger 34 festgelegt gehalten wird, wobei gestattet wird, dass sich das Hohlrad (oder Außenrad) 38 dreht. Bei solch einer Anordnung wird das Gebläse 23 von dem Hohlrad 38 angetrieben. Als ein weiteres alternatives Beispiel kann das Getriebe 30 ein Differenzialgetriebe sein, bei dem gestattet wird, dass sich sowohl das Hohlrad 38 als auch der Planetenträger 34 drehen.

Es versteht sich, dass die in den Figuren 2 und 3 gezeigte Anordnung lediglich beispielhaft ist und verschiedene Alternativen in dem Schutzumfang der vorliegenden Offenbarung liegen. Lediglich beispielhaft kann eine beliebige geeignete Anordnung zur Positionierung des Getriebes 30 in dem Triebwerk 10 und/oder zur Verbindung des Getriebes 30 mit dem Triebwerk 10 verwendet werden. Als ein weiteres Beispiel können die Verbindungen (z. B. die Gestänge 36, 40 in dem Beispiel von Figur 2) zwischen dem Getriebe 30 und anderen Teilen des Triebwerks 10 (wie z. B. der Eingangswelle 26, der Ausgangswelle und der festgelegten Struktur 24) einen gewissen Grad an Steifigkeit oder Flexibilität aufweisen. Als ein weiteres Beispiel kann eine beliebige geeignete Anordnung der Lager zwischen rotierenden und stationären Teilen des Triebwerks (beispielsweise zwischen der Eingangs und der Ausgangswelle des Getriebes 30 und den festgelegten Strukturen, wie z. B. dem Getriebegehäuse) verwendet werden, und die Offenbarung ist nicht auf die beispielhafte Anordnung von Figur 2 beschränkt. Beispielsweise ist für den Fachmann ohne weiteres erkenntlich, dass sich die Anordnung von Ausgang und Stützgestängen und Lagerpositionierungen bei einer Sternanordnung (oben beschrieben) des Getriebes 30 in der Regel von jenen, die beispielhaft in Figur 2 gezeigt werden, unterscheiden würden.

Entsprechend dehnt sich die vorliegende Offenbarung auf ein Gasturbinentriebwerk mit einer beliebigen Anordnung der Getriebearten (beispielsweise sternförmig oder planetenartig), Stützstrukturen, Eingangs und Ausgangswellenanordnung und Lagerpositionierungen aus. Optional kann das Getriebe Neben und/oder alternative Komponenten (z. B. den Mitteldruckverdichter und/oder einen Nachverdichter) antreiben.

Andere Gasturbinentriebwerke, bei denen die vorliegende Offenbarung Anwendung finden kann, können alternative Konfigurationen aufweisen. Beispielsweise können derartige Triebwerke eine alternative Anzahl an Verdichtern und/oder Turbinen und/oder eine alternative Anzahl an Verbindungswellen aufweisen. Als ein weiteres Beispiel weist das in Fig. 1 gezeigte Gasturbinentriebwerk eine Teilungsstromdüse 20, 22 auf, was bedeutet, dass der Strom durch den Bypasskanal 22 seine eigene Düse aufweist, die von der Triebwerkskerndüse 20 separat und davon radial außen ist. Jedoch ist dies nicht einschränkend und ein beliebiger Aspekt der vorliegenden Offenbarung kann auch auf Triebwerke zutreffen, bei denen der Strom durch den Bypasskanal 22 und der Strom durch den Kern 11 vor (oder stromaufwärts) einer einzigen Düse, die als eine Mischstromdüse bezeichnet werden kann, vermischt oder kombiniert werden. Eine oder beide Düsen (ob Misch oder Teilungsstrom) kann oder können einen festgelegten oder variablen Bereich aufweisen. Obgleich sich das beschriebene Beispiel auf ein Turbogebläsetriebwerk bezieht, kann die Offenbarung beispielsweise bei einer beliebigen Art von Gasturbinentriebwerk, wie z. B. bei einem Open-Rotor (bei dem die Gebläsestufe nicht von einer Triebwerksgondel umgeben wird) oder einem Turboprop-Triebwerk, angewendet werden.

Die Geometrie des Gasturbinentriebwerks 10 und Komponenten davon wird bzw. werden durch ein herkömmliches Achsensystem definiert, das eine axiale Richtung (die auf die Drehachse 9 ausgerichtet ist), eine radiale Richtung (in der Richtung von unten nach oben in Figur 1) und eine Umfangsrichtung (senkrecht zu der Ansicht in Figur 1) umfasst. Die axiale, die radiale und die Umfangsrichtung verlaufen senkrecht zueinander.

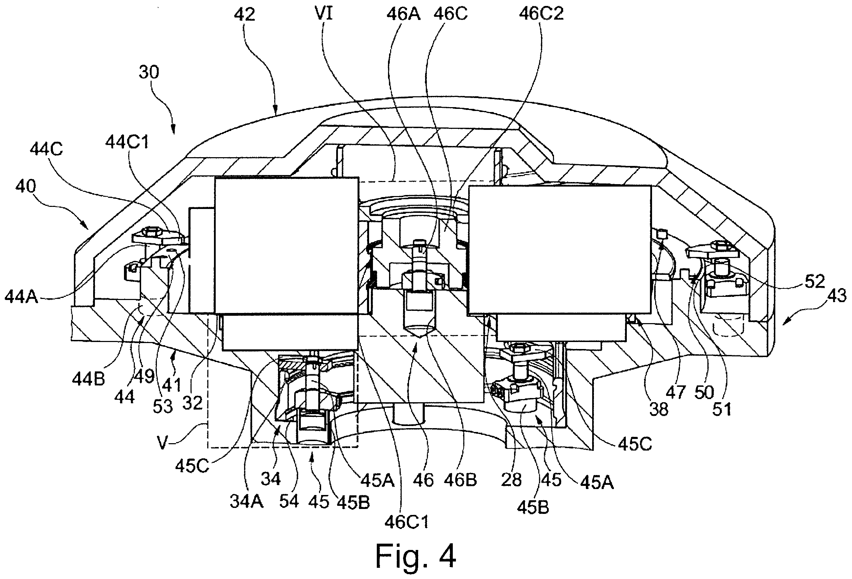

Figur 4 zeigt eine dreidimensionale Schnittansicht eines Gehäuses 40 in dem das Getriebe 30 vor der Montage in das Gasturbinentriebwerk 10 angeordnet ist. Das Gehäuse 40 umfasst ein erstes Gehäuseteil 41 und ein zweites Gehäuseteil 42, die im Bereich einer Teilungsebene 43 aneinander angrenzen und dicht miteinander verbunden sind. Dabei besteht die Möglichkeit, dass die beiden Gehäuseteile 41 und 42 über Schraubverbindungen, Klemmeinrichtungen oder dergleichen fest miteinander wirkverbunden sind und im Bereich der Teilungsebene 43 eine Dichteinrichtung vorgesehen ist.

Das erste Gehäuseteil 41 ist mit Mitteln 70 und 71 ausgeführt, über die das Getriebe 30 im ersten Gehäuseteil 41 in axialer Richtung x des Gehäuseteiles 41 arretierbar ist. Des Weiteren umfasst das Gehäuseteil 41 auch Mittel 72, 47 zum drehfesten Verbinden des Sonnenrades 28, der Planetenräder 32, des Planetenträgers 34 und des Hohlrades 38 mit dem ersten Gehäuseteil 41.

Dabei umfassen die Mittel 70 und 71 jeweils hydraulisch betätigbare doppelt wirkende Kolben-Zylinder-Einheiten 44, 45, die im Wesentlichen den gleichen konstruktiven Aufbau aufweisen. Deshalb werden der konstruktive Aufbau und die Funktionsweise der Kolben-Zylinder-Einheiten 44 und 45 zugunsten der Übersichtlichkeit in der nachfolgenden Beschreibung lediglich anhand der Kolben-Zylinder-Einheit 44 näher erläutert.

Die Kolben-Zylinder-Einheit 44 umfasst einen Kolben 44A, der bereichsweise in einem Zylinder 44B angeordnet ist. Der Kolben 44A ist sowohl translatorisch als auch rotatorisch gegenüber dem Zylinder 44B bewegbar ausgeführt. Zusätzlich weist die Kolben-Zylinder-Einheit 44 ein mit dem Kolben 44A verbundenes Spannelement 44C auf.

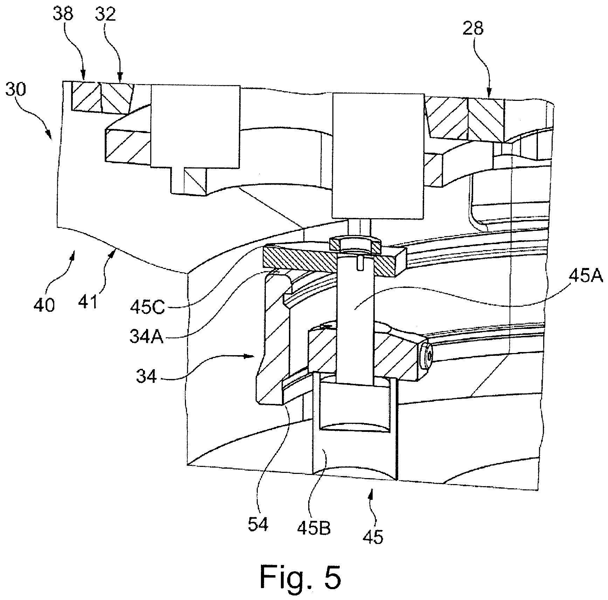

In dem in den Figur 4 und Figur 5 dargestellten Betriebszustand der Kolben-Zylinder Einheit 44 liegt das Spannelement 44C mit einer Unterseite 44C1 an einer Oberseite 49 eines mit dem Hohlrad 38 verbundenen Flansches 50 auf. Dabei wird das Spannelement 44C von dem Kolben 44A gegen die Oberseite 49 des Flansches 50 gedrückt. Zusätzlich liegt der Flansch 50 mit seiner Unterseite 51 an einer axialen Anlagefläche 52 des ersten Gehäuseteiles 41 an. Damit ist das Hohlrad 38 des Getriebes 30 von der Kolben-Zylinder-Einheit 44 axial im ersten Gehäuseteil 41 arretiert.

Der Flansch 50 umfasst mehrere in Umfangsrichtung zueinander beabstandete Bohrungen 53, über die das Hohlrad 38 drehfest mit der Stützstruktur 24 über entsprechende Schraubverbindungen koppelbar ist. Im vorliegenden Fall werden die Bohrungen 53 des Flansches 50 zum drehfesten Verbinden des Hohlrades 38 mit dem ersten Gehäuseteil 41 verwendet. Hierfür ist das Mittel 47 als ein in eine Bohrung 53 eingreifender Bolzen ausgeführt, der fest mit dem ersten Gehäuseteil 41 verbunden ist.

Zum Lösen der axialen Arretierung des Hohlrades 38 mit dem ersten Gehäuseteil 41 wird zunächst der Kolben 44A translatorisch gegenüber der Oberseite 49 des Flansches 50 verstellt, so dass ein Abstand zwischen der Unterseite 44C1 des Spannelementes 44C und der Oberseite 49 des Flansches 50 ansteigt. Anschließend wird der Kolben 44A gegenüber dem Zylinder 44B verdreht, bis keine Überlappung zwischen dem Spannelement 44C und dem Flansch 50 mehr vorliegt.

Zum axialen Arretieren des Getriebes 30 am ersten Gehäuseteil 41 wird die Kolben-Zylinder-Einheit 44 ausgehend von dem letztgenannten Betriebszustand zunächst rotatorisch betätigt und anschließend der Kolben 44A axial bzw. translatorisch verstellt, bis das Spannelement 44C seinen in Figur 4 dargestellten Betriebszustand aufweist. Hierfür wird zunächst das Getriebe 30 in das erste Gehäuseteil 41 so eingelegt, dass der Flansch 50 mit seiner Unterseite 51 an der axialen Anlagefläche 52 anliegt.

Darüber hinaus umfasst das Mittel 71 zum axialen Arretieren des Planetenträgers 34 einen Kolben 45A und einen Zylinder 45B. Zusätzlich ist der Kolben 45A mit einem Spannelement 45C wirkverbunden, das in dem in Fig. 4 bzw. Fig. 5 dargestellten Umfang an einer axialen Fläche 34A des Planetenträgers 34 anliegt und diesen gegen eine weitere axiale Anlagefläche 54 des ersten Gehäuseteiles 41 drückt. Damit ist auch der Planetenträger 34 im ersten Gehäuseteil 41 in axialer Richtung arretiert.

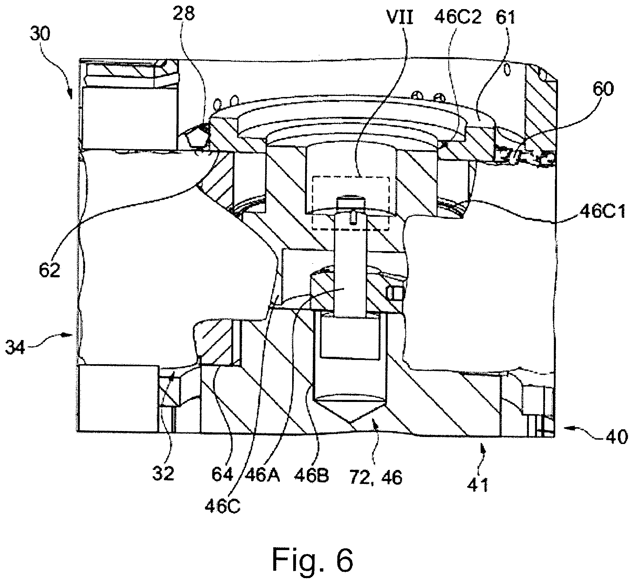

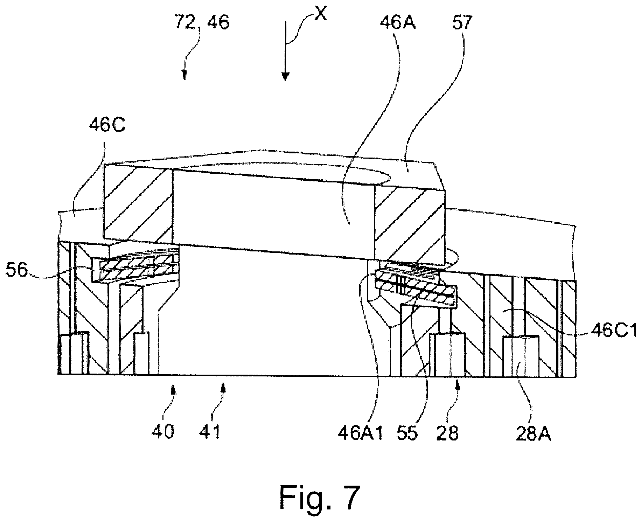

Des Weiteren zeigt Figur 6 eine vergrößerte Ansicht eines in Figur 4 näher gekennzeichneten Bereiches VI, der das Mittel 72 zum radialen Arretieren des Getriebes 30 im ersten Gehäuseteil 41 umfasst. Das Mittel 72 ist ebenfalls mit einer hydraulisch betätigbaren doppelwirkenden Kolben-Zylinder-Einrichtung 46 ausgebildet, die einen Kolben 46A und einen Zylinder 46B umfasst. Der Kolben 46A ist gegenüber dem Zylinder 46B sowohl translatorisch als auch rotatorisch verfahrbar ausgeführt. Der Kolben 46A steht in der in Fig. 7 näher dargestellten Art und Weise mit einem zusätzlichen Spannelement 46C in Wirkverbindung. Das Spannelement 46C greift in ein radial innenliegendes Zahnprofil 28A mit einer entsprechend angepassten Verzahnung 46C1 ein, womit das Spannelement 46C und das Sonnenrad 28 drehfest miteinander verbunden sind.

Auf den Kolben 46A der Kolben-Zylinder-Einrichtung 46 ist ein Ringelement 55 aufgeschoben, das an seinem radial inneren Durchmesser an einer Außenseite 46A1 des Kolbens 46A anliegt. Im Bereich seines radial äußeren Durchmessers greift das Ringelement 55 in eine Ringnut 56 des Spannelementes 46C ein. Zur Montage ist das Ringelement 55 in der Art eines Federrings ausgeführt, der durch radiales Zusammendrücken in die Ringnut 56 des Spannelementes 46C einführbar ist. Anschließend wird der Kolben 46A axial durch die innere Öffnung des Ringelementes 55 geschoben und auf den Kolben 46A eine Mutter 57 aufgeschraubt. Dabei übt die Mutter 57 eine axiale Kraft auf das Ringelement 55 aus. Die axiale Kraft bewirkt, dass das Ringelement 55 verformt wird und sich der äußere Durchmesser des Ringelementes 55 vergrößert und dessen innerer Durchmesser sich verkleinert. Durch die Verformung des Ringelementes 55 wird eine kraftschlüssige Verbindung zwischen dem Kolben 46A und dem Spannelement 46C hergestellt.

Wiederum daran anschließend wird der Kolben 46A gegenüber dem Zylinder 46B verdreht. Die Drehbewegung des Kolbens 46A wird über das Ringelement 55 auf das Spannelement 46C übertragen. Die Drehbewegung des Spannelements 46C bewirkt wiederum eine Drehbewegung des Sonnenrades 28, das mit den Planetenrädern 32 in Eingriff steht. Eine weitere Rotation des Sonnenrades 28 bewirkt, dass Zähne 58 des Sonnenrades 28 im Bereich ihrer Zahnflanken in Anlage mit Zahnflanken von Zähnen 59 der Planetenräder 32 kommen. Sobald sich die Zahnflanken der Zähne 58 des Sonnenrades 28 und der Zähne 59 der Planetenräder 32 in Anlage befinden, führen auch die Planetenräder 32 eine Rotation aus. Dabei werden die Planetenräder 32 solange verdreht, bis die Zähne 59 im Bereich ihrer Zahnflanken wiederum in Anlage mit Zahnflanken von Zähnen 60 des Hohlrades 38 kommen. Steigt der Druck im Zylinder 46B auf einen vordefinierten Druckwert an, wird erkannt, dass das Sonnenrad 28 nicht weiter verdreht wird und das gesamte Getriebe in radialer Richtung verspannt ist. In diesem Betriebszustand ist das Getriebe 30 in radialer Richtung im ersten Gehäuseteil 41 arretiert.

Wiederum anschließend daran wird eine weitere in Figur 6 näher dargestellte Mutter 61 auf einen Gewindebereich 46C2 des Spannelementes 46C aufgeschraubt, bis die Mutter 61 mit einer Unterseite 62 an einer axialen Seitenfläche 63 des Sonnenrades 28 anliegt.

Wird die Mutter 61 mit einem entsprechenden Drehmoment auf das Spannelement 46C aufgeschraubt, wird das Sonnenrad 28 mit einer zu der axialen Seitenfläche 63 gegenüberliegenden weiteren Seitenfläche 64 gegen eine zusätzliche axiale Anlagefläche 65 des ersten Gehäuseteiles 41 gedrückt, womit auch das Sonnenrad 28 in axialer Richtung im ersten Gehäuseteil 41 arretiert ist.

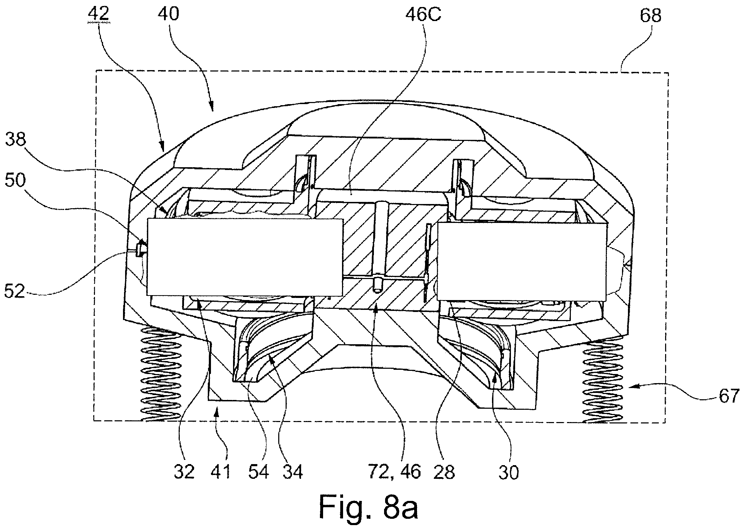

Figur 8a zeigt eine dreidimensionale Schnittansicht des Gehäuses 40 und des darin angeordneten Getriebes 30. Das Getriebe 30 ist über die Mittel 44 bis 47 sowohl in axialer Richtung als auch in radialer Richtung im ersten Gehäuseteil 41 in vorstehend näher beschriebenem Umfang arretiert. Dabei ist das Modul, das das Gehäuse 40 und das Getriebe 30 umfasst, in seiner Lager- und Transportposition gezeigt, in der das erste Gehäuseteil 41 das untere Gehäuseteil ist und das zweite Gehäuseteil 42 das obere Gehäuseteil darstellt. Um aus dem Eigengewicht des Moduls resultierende Belastungen während eines Transports des Moduls so gering wie möglich halten zu können, ist das Modul über Feder-Dämpfer-Einheiten 67 mit einer das Modul aufnehmenden Transportbox 68 wirkverbunden.

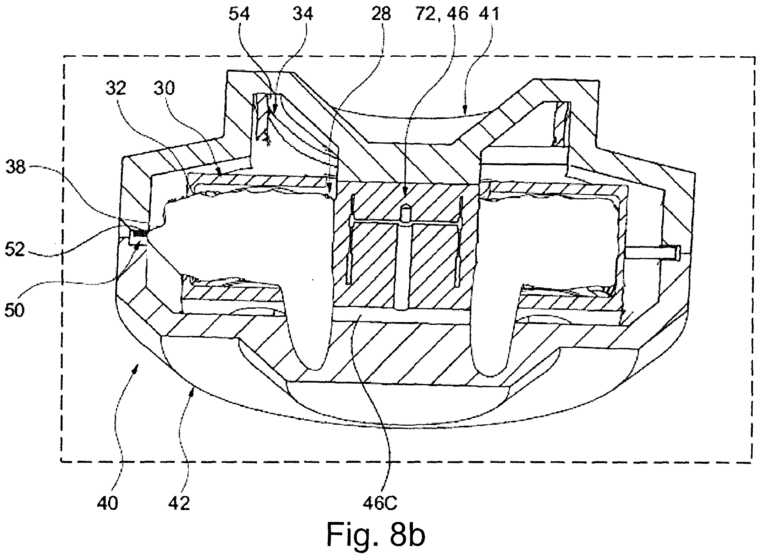

Für eine Montage des Getriebes 30 im Gasturbinentriebwerk 10 wird das Modul aus der Transportbox 68 entnommen. Hierfür wird die Wirkverbindung zwischen dem ersten Gehäuseteil 41 und den Feder-Dämpfer-Einheiten 67 gelöst. Anschließend wird das Modul um 180° in seine Montageposition verdreht, die in Fig. 8b gezeigt ist. Für die Montage weist das erste Gehäuseteil 41 nicht näher dargestellte Montagebereiche auf, über die das Modul mit Hilfe herkömmlicher Betätigungseinheiten bzw. Hebeeinrichtungen vertikal in das Gasturbinentriebwerk 10 einführbar ist. Vor dem vertikalen Einführen des Getriebes 30 in das Gasturbinentriebwerk 10 wird zunächst das zweite Gehäuseteil 42 vom ersten Gehäuseteil 41 demontiert. Wiederum daran anschließend wird die Kolben-Zylinder-Einrichtung 46 rotatorisch betätigt und der radiale Verspannungszustand des Getriebes 30 aufgehoben, wenn die Mutter 61 vom Spannelement 46C gelöst ist. Anschließend daran wird die Mutter 57 vom Kolben 46A gelöst und der Kolben 46A aus dem Eingriff mit dem Ringelement 55 geführt. In diesem Betriebszustand ist das Spannelement 46C in axialer Richtung aus dem Sonnenrad 28 entnehmbar.

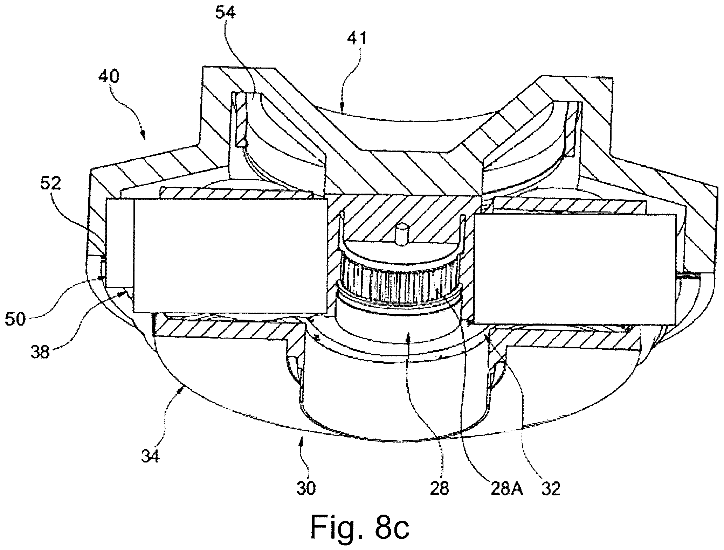

Der letztbeschriebene Betriebszustand des Getriebes 30 und des Gehäuses 40 ist in Figur 8c dargestellt. In diesem Betriebszustand des Getriebes 30 und des Gehäuses 40 wird das Getriebe 30 gemeinsam mit dem ersten Gehäuseteil 41 vertikal von oben in das ebenfalls sich in vertikaler Position befindende Gasturbinentriebwerk 10 eingeschoben, bis das Sonnenrad 28 mit seinem Zahnprofil 28A in Eingriff mit einem Zahnprofil der Welle 26 steht. Zur Demontage des ersten Gehäuseteiles 41 vom Getriebe 30 werden die Kolben-Zylinder-Einheiten 44 und 45 von einem gemeinsamen hydraulischen Steuergerät hydraulisch angesteuert, über das auch die Kolben-Zylinder-Einrichtung 46 betätigbar ist. Durch die steuergerätseitige Betätigung werden die Spannelemente 44C und 45C vom Flansch 50 bzw. vom Planetenträger 34 gelöst, womit die axiale Arretierung des Hohlrades 38 und des Planetenträgers 34 im ersten Gehäuseteil 41 aufgehoben ist. Anschließend wird das erste Gehäuseteil 41 vom Getriebe 30 nach oben abgehoben und das Getriebe 30 weiter mit dem Gasturbinentriebwerk 10 verbunden.

Die Kolben-Zylinder-Einheiten 44, 45 und die Kolben-Zylinder-Einrichtung 46 werden wie bereits kurz beschrieben über ein externes hydraulisches Steuergerät betätigt. Dabei sind die Steuerleitungen der Kolben-Zylinder-Einheiten 44, 45 und der Kolben-Zylinder-Einrichtung 46 so ausgeführt, dass das Sonnenrad 28, das Hohlrad 38 und der Planetenträger 34 unabhängig voneinander arretierbar sind und wieder frei gegeben werden können. Dabei werden für die Kolben-Zylinder-Einheiten 44, 45 und die Kolben-Zylinder-Einrichtung 46 jeweils lediglich zwei Steuerleitungen benötigt, die mit dem externen Steuergerät verbunden sind. Damit werden insgesamt nur sechs Steuerleitungen benötigt und die Arretierung ist auf konstruktiv einfache Art und Weise bei gleichzeitig geringen Einrichtungszeiten möglich.

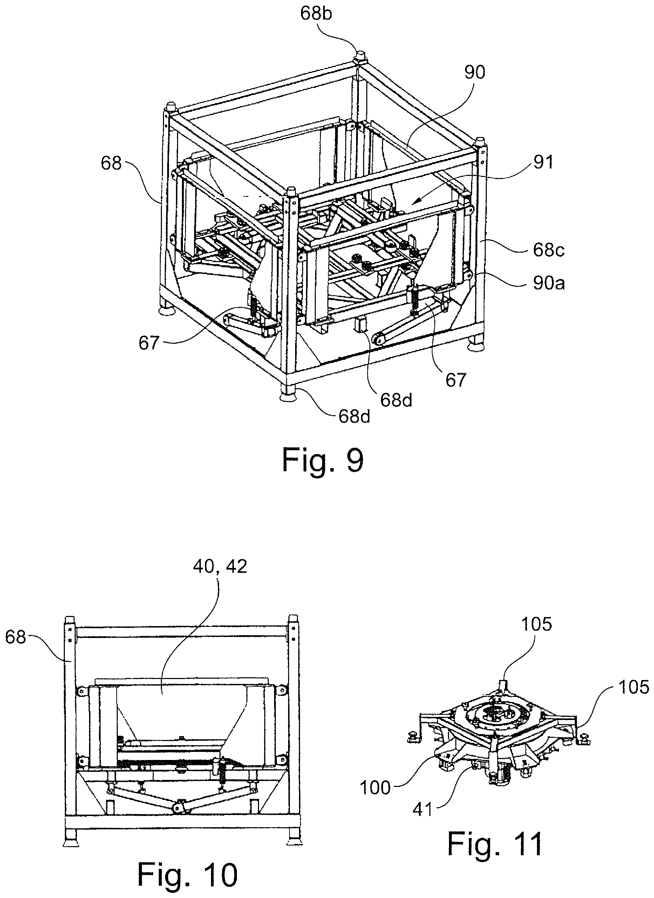

Die Darstellung nach Figur 9 zeigt eine erfindungsgemäße Transportbox 68. Diese bildet hinsichtlich ihrer Außenkanten eine quaderartige Struktur, die über Fußabschnitte 68a unter Bildung eines Zwischenraumes auf einer Stellfläche abgestellt werden kann. Die Transportbox 68 kann hierbei insbesondere derart ausgebildet sein, dass diese von einer Flurfördereinrichtung leicht aufgegriffen werden kann. Sie kann auch Aufgriffsstrukturen bereitstellen, die einen anderweitigen Aufgriff ermöglichen. Im oberen Bereich der Transportbox 68 können Zentrierorgane 68b vorgesehen sein, die es ermöglichen, entsprechend kompatible weitere Transportboxen vertikal zu stapeln. Hierbei zentrieren sich dann die Komplemtärgeometrien der Fußabschnitte 68a an den Zentrierorganen 68b.

Die Transportbox 68 umfasst einen Schlitten 90. Dieser Schlitten 90 ist in vertikaler Richtung an einer Rahmenstruktur 68c der Transportbox 68 geführt. Der Schlitten 90 ist in vertikaler Richtung durch Federmechaniken 67 gefedert und wird durch diese in eine Mittenstellung gedrängt aus welcher er nach unten sowie nach oben verfahren kann. Die Federmechanik 67 ist derart ausgelegt, dass diese Mittenstellung bei einer Belastung eingenommen wird, die der Belastung durch die in den Schlitten einzusetzende Einheit aus Triebwerksgetriebe und Umhausung/Fixiereinrichtung entspricht. Der Schlitten 90 ist hier durch Linearführungen geführt. Der vertikale Verfahrweg nach unten ist durch einen nachgiebigen, insbesondere elastomeren Endanschlag 68d begrenzt. Die Führung des Schlittens 90 ist im Zusammenspiel mit den vertikalen Eckpfosten der Rahmenstruktur 68c realisiert. Die Führung ist als Linearführung realisiert und umfasst hier Laufrollen 90a. Die Federmechanik umfasst Gelenkarme 90b, die am Schlitten 90 angelenkt sind und sich über Rollen gegen die Rahmenstruktur 68c stützen. Die Gelenkarme sind federbelastet. Die Kennlinie der Aufhängung ist progressiv zunehmend, so dass nahe der vertikalen Endpositionen deutlich erhöhte Stützkräfte den Schlitten 90 gegenüber der Rahmenstruktur 68 stützen.

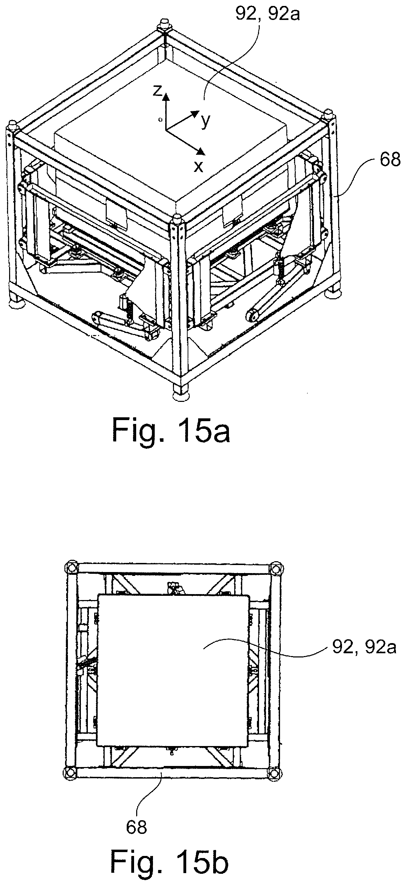

In dem vertikal verlagerbaren Schlitten 90 ist eine Lateralführungsmechanik 91 aufgenommen. Diese stellt eine Aufstandsstruktur bereit, auf welche ein Einsatz 92 (vgl. Fig. 15a) aufsetzbar ist. Dieser Einsatz 92 ist innerhalb des Schlittens 90 in horizontaler Richtung in zwei zueinander senkrechte Raumrichtungen begrenzt verfahrbar. Die Lateralführungsmechanik 91 positioniert den Einsatz 92 durch eine Feder/Dämpfermechanik in einer Mittenstellung. Der Einsatz 92 kann als kastenartige Struktur ausgebildet sein und ist mit einem Deckel 92a (vgl. Fig. 15a) verschließbar. Die Endpositionen werden ebenfalls durch nachgiebige Endanschläge, insbesondere Elastomerstrukturen definiert.

Die Darstellung nach Figur 10 zeigt die Transportanordnung in einem Zustand, in welchem sich der Schlitten 90 im Wesentlichen in vertikaler Mittenposition befindet. Das in Verbindung mit den Figuren 4 bis 8c beschriebene erfindungsgemäße Gehäuse 40 wird vorzugsweise unter Einbindung des Einsatzes 92 so in den Schlitten 90 eingesetzt, dass sich das zweite Gehäuseteil 42 im unteren Bereich des Schlittens 90 befindet und hierbei als Ölwanne fungiert.

Die Darstellung nach Figur 11 zeigt die zur Fixierung der Getriebekomponenten in verspanntem Zustand vorgesehene Baugruppe die auch als Montagehilfe für das Einsetzen des Getriebes in ein Triebwerk oder zum Ausheben des Getriebes aus dem Treibwerk herangezogen wird. Diese Baugruppe umfasst eine gehäuseartige Struktur die hier das erste Gehäuseteil 41 bildet. Über diese Baugruppe werden die Planetenräder 32 (vgl. Fig. 3) zwischen dem fixierten Hohlrad 38 und dem relativ zum Hohlrad 38 mit einem Drehmoment belasteten und in diesem Zustand ebenfalls fixierten Sonnenrad 28, spielfrei gehalten. Die durch diese Baugruppe gebildete Fixiereinrichtung kann das erste Gehäuseteil 41 bilden. Es ist hier in der Art einer "Spinne" gestaltet, die sich über die radial auskragenden Beine 105 abstützt und an ihrer Unterseite das Getriebe trägt.

Die Baugruppe nach Figur 11 umfasst Abschnitte 100, die mit dem Hohlrad des Getriebes starr koppelbar sind. Weiterhin umfasst diese Baugruppe Armabschnitte 101, die mit dem Einsatz 92 und/oder dem zweiten, vorzugsweise schalenartigen Gehäuseteil 42 koppelbar sind. Über diese Baugruppe nach Figur 11 kann das Getriebe in verspanntem Zustand aus der Transportanordnung ausgehoben und in die Einbauposition in einem Triebwerk transferiert werden.

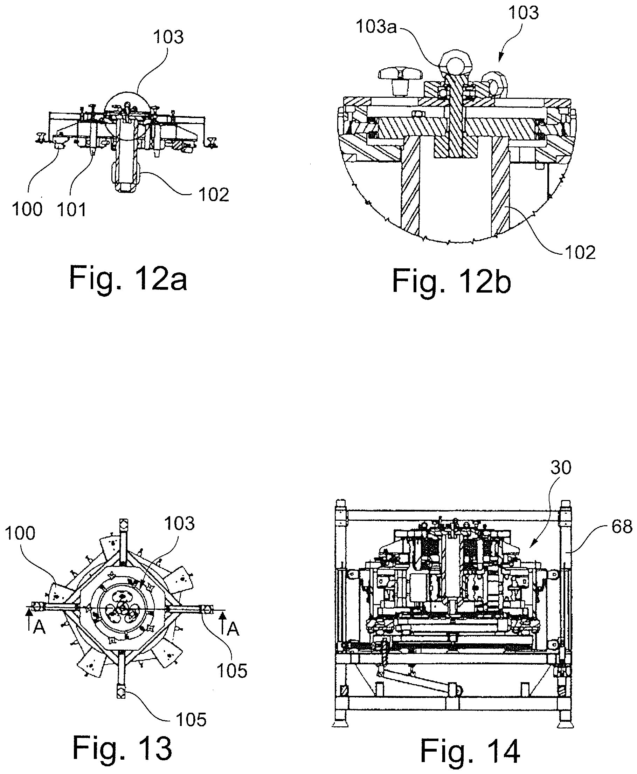

Weitere Einzelheiten der als Fixiereinrichtung fungierenden Baugruppe sind aus den Darstellungen nach den Figuren 12a, 12b und 13 ersichtlich. An diese Baugruppe werden die Komponenten des Getriebes axial angebunden und in sich verspannt. Das Hohlrad wird hierbei durch die Armabschnitte 100 aufgegriffen. Die Zapfen 101 greifen in Geometrien des Planetenträgers ein. Der Kernzapfen 102 greift über eine an diesem ausgebildete Außenverzahnung in eine Innenverzahnung des Sonnenrades ein. Der Kernzapfen 102 wird durch eine Spannmechanik 103 um seine Längsachse mit einem Drehmoment belastet und drängt dabei die Verzahnung der Planetenräder in einen spielfreien Druckkontakt mit der Innenverzahnung des Hohlrades und des Sonnenrades. Das derart in der Fixiereinrichtung aufgenommene Getriebe wird in das zweite Getriebegehäuse 42 eingesetzt. Diese Gruppe wird in den Einsatz 92 eingebracht. Hierbei kann sich der Einsatz 92 schon im Schlitten 90 befinden, oder der Einsatz 92 wird in befrachtetem Zustand in den Schlitten 90 eingesetzt.

Die Spannmechanik 103 ist vorzugsweise als leichtgängige Stellmechanik ausgeführt in welcher eine Umsetzung einer Stellkraft in ein Torsionsmoment durch eine Wälzkörpermechanik, z.B. ein Kugelgewinde, oder eine Keilflächenmechanik bewerkstelligt wird. Im vorliegenden Fall wird drehmomentenüberwacht eine zur Achse des Zapfens 102 koaxiale Feingewindeschraube 103a tordiert. Die durch diese Schraube 103a generierte Axialkraft wird durch eine Wälzkörpermechanik in ein Torsionsmoment konvertiert. Dieses Torsionsmoment greift dann über den Zapfen 102 an dem Sonnenrad 28 an. Die gegen einander verspannten Getriebekomponenten können in verspanntem Zustand in der Fixiereinrichtung vorzugsweise reibschlüssig fixiert werden, so dass grundsätzlich dieser verspannte Zustand auch noch nach einem Lösen der die Axialkraft generierenden Schraube bestehen bleibt und die zur Drehmomentengenerierung herangezogene Mechanik nicht dauerhaft belastet ist oder durch Setzungseffekte entspannt werden würde.

Die Darstellungen nach den Figuren 14, 15a und 15b zeigen hierbei eine für den Transfer eines Triebwerkgetriebes vollständig bestückte Transportbox 68. In dieser ist über den vertikal in Richtung der Achse z gefederten Schlitten der Einsatz 92 aufgenommen und dabei auch derart geführt, dass dieser begrenzt lateral relativ zur Transportbox entlang der Achsen x/y verlagerbar ist. Der Einsatz 92 ist nach den Darstellungen der Figuren 15a und 15b mit einem Deckel 92a geschlossen. Nach Öffnen dieses Deckels 92a, kann das Getriebe durch Aufgriff und Handhabung der Fixiereinrichtung 41 ausgehoben und in die Montageposition am Triebwerk verbracht werden. Über die Fixiereinrichtung 41 kann auch eine Getriebebaugruppe aus einem Triebwerk entnommen werden und als Baugruppe in eine Transportbox eingesetzt werden. Bei dieser Vorgehensweise ist auch für bereits in Betrieb genommene Getriebe, eine sichere und schonende Unterbringung im Rahmen von Wartungs- oder Überholungsarbeiten ermöglicht.

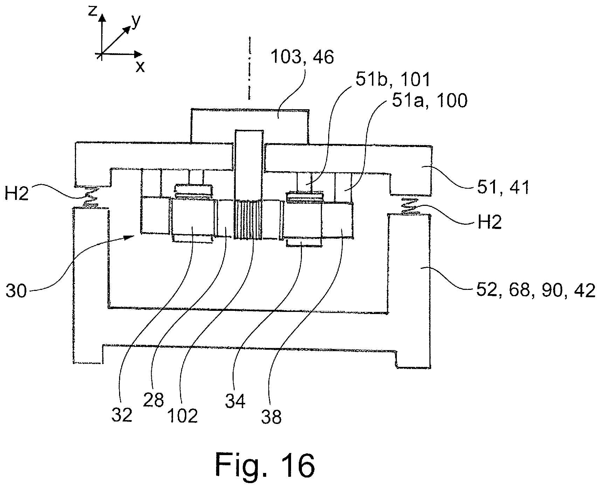

Die Darstellung nach Figur 16 veranschaulicht in abstrahierter Form nochmals einzelne, bei der erfindungsgemäßen Anordnung umgesetzte konzeptionale Ansätze, die jeweils auch eigenständige Erfindungskomplexe darstellen. Die Anordnung umfasst zwei Hauptstrukturen S1, S2. Die Hauptstruktur S1 bildet die Träger- und Handhabungsstruktur für das Umlaufrädergetriebe 30. Die Hauptstruktur S2 bildet die zur Außenhandhabung der Einheit, z.B. dem Transport der Gesamteinheit vorgesehen Trägerstruktur.

Die Hauptstruktur S1 und die Hauptstruktur S2 sind im Ergebnis nachgiebig kinematisch gekoppelt, dies ist hier durch die Federn H1, H2 veranschaulicht. Die durch die Federn H1, H2 gebildeten nachgiebigen Koppelstellen können auch an anderer Stelle angeordnet sein, so dass im Ergebnis die Hauptstruktur S1 gegenüber der von der Außenhandhabung betroffenen Struktur S2 nachgiebig abgestützt ist. Diese Nachgiebigkeit besteht in drei Raumrichtungen x,y,z.

Die Hauptstruktur S1 kann ein Gehäuse bilden und damit insbesondere dem ersten Gehäuseteil 41 in der Gestaltung nach den Figuren 4 bis 8c entsprechen. An diese Hauptstruktur S1 werden durch Fixiermittel F1, F2 das Hohlrad 38 und der Planetenträger 34 angebunden. Hierbei wird das Hohlrad 38 in Richtung der Z-Achse mit der Hauptstruktur S1 starr gekoppelt. Die Axialposition des Planetenträgers 34 kann festgelegt werden, im vorliegenden Fall wird nur dessen Drehung um die Z-Achse verhindert und der Planetenträger 34 nur insoweit mit der Hauptstruktur S1 gekoppelt. Im Bezug auf das Ausführungsbeispiel nach den Figuren 9 bis 15b entsprechen hierbei die zur Anbindung des Hohlrades 38 und des Planetenträgers 34 herangezogenen Koppelungsmittel S1a, S1b den Armabschnitten 100 und den Zapfen 101.

Das Sonnenrad 28 wird um die Achse Z mit einem definierten Drehmoment belastet. Hierzu greift der Zapfen 102 in die Innenverzahnung des Sonnenrades 28 ein. Der Zapfen 102 ist gegenüber der Hauptstruktur S1 um die Achse z drehbar, zumindest in einem hinreichenden Schwenkbereich. Das an dem Zapfen 102 angreifende Drehmoment wird durch eine Spannmechanik 103 generiert. Diese kann als rein mechanisches System realisiert sein und setzt vorzugsweise eine Axialkraft einer Schraube über eine Rollkeilmechanik in ein Drehmoment um. Dieses Drehmoment ist zwischen dem Zapfen 102 und der Hauptstruktur S1 wirksam. Aufgrund der Festlegung des Hohlrades 38 und des Planetenträgers 34 an der Hauptstruktur S1 wird das Getriebe 30 durch das am Sonnenrad 28 anliegenden Drehmoment verspannt und die Verzahnungen der Planetenräder 32 gelangen in den jeweiligen Eingriffszonen in einen durch das Zapfendrehmonent definierten Druckkontakt.

Die Hauptstruktur S1 kann ein Gehäuse 40, oder ein Gehäuseteil 41 eines Gehäuses 40 bilden. Sie kann auch den Deckel 92a des Einsatzes 92 bilden. Sie kann auch als gestellartige Struktur ausgebildet sein und in ein Gehäuse oder eine Transportbox 68 eingesetzt sein. Die Hauptstruktur S2 kann ebenfalls mehrgliedrig aufgebaut sein. Sie kann die Transportbox 68, den Schlitten 90, den Einsatz 92 oder das zweite Gehäuseteil 42 darstellen. Jeweils auch für sich eigenständige und kombinierbare konzeptionelle Einzel-Eigenschaften der Anordnung sind damit insbesondere, dass:
- das Getriebe zu einer Baugruppe zusammengefasst an eine Trägerkomponente der Anordnung angebunden wird;
- das Getriebe zur Beseitigung des (Umfangs-)Spiels in der Verzahnung verspannt wird;
- die so gebildete Einheit resilient suspendiert wird; das Getriebe eingehaust wird;
- das Getriebe durch eine Komponente der Anordnung handhabbar wird;
- jene Komponente als Einsatzhilfe für das Einsetzen der Getriebebaugruppe in ein Triebwerk vorgesehen ist,
- die Aufhängungsereignisse des Getriebes erfasst und dokumentiert werden,
- das Getriebe in der Umhausung mit einem Konservierungsmedium in Kontakt steht.

Für den Fachmann ist verständlich, dass ein Merkmal oder Parameter, das bzw. der in Bezug auf einen der obigen Aspekte beschrieben wird, bei einem beliebigen anderen Aspekt angewendet werden kann, sofern sie sich nicht gegenseitig ausschließen.

## Patentansprüche

1. Transfereinrichtung zur Handhabung eines Getriebes (30) für ein Triebwerk, wobei dieses Getriebe (30) ein Hohlrad (38), Planetenräder (32), einen Planetenträger (34) und ein Sonnenrad (28) umfasst, mit:
- einer Fixiereinrichtung (40, 41, 42), die mit dem Hohlrad (38), dem Planetenträger (29) und dem Sonnenrad (28) koppelbar ist, derart dass das Getriebe (30) über die Fixiereinrichtung (40,41,42) transferierbar ist und
- einer Spannmechanik (46), die in die Fixiereinrichtung (40, 41, 42) eingebunden ist, wobei
- über die Spannmechanik (46, 103) das Getriebe (30) in einen verspannten Zustand bringbar ist, **dadurch gekennzeichnet, dass** die Fixiereinrichtung (40, 41, 42) ein Gehäuse (40) bildet, mit einem ersten Gehäuseteil (41) und mindestens einem damit verbindbaren zweiten Gehäuseteil (42), wobei wenigstens das erste Gehäuseteil (41) mit Mitteln (70, 71, 72, 47) zum Arretieren des Getriebes (30) im ersten Gehäuseteil (41) in axialer Richtung (x) des ersten Gehäuseteiles (41) und zum drehfesten Verbinden von zumindest einem Bauteil (28, 32, 34, 38) des Getriebes (30) mit dem ersten Gehäuseteil (41) ausgeführt ist, wobei das erste Gehäuseteil (41) zusätzlich mindestens einen Montagebereich aufweist, über den das erste Gehäuseteil (41) während einer Montage zusammen mit dem Getriebe (30) mittels einer Hebeeinrichtung handhabbar ist.

2. Transfereinrichtung nach Anspruch 1, **dadurch gekennzeichnet, dass** über die Spannmechanik (46, 103) ein Drehmoment in das Sonnenrad (28) einleitbar ist und hierdurch der Eingriff der Planetenräder (32) in das Sonnenrad (28) und das Hohlrad (38) belastet wird.

3. Transfereinrichtung nach Anspruch 1, **dadurch gekennzeichnet, dass** zumindest das erste Gehäuseteil (41) axiale Anlageflächen (52, 54, 65) für die Bauteile (28, 32, 34, 38) des Getriebes (30) umfasst.

4. Transfereinrichtung nach Anspruch 3, **dadurch gekennzeichnet, dass** wenigstens ein Mittel (70, 71) zum axialen Arretieren des Getriebes (30) im ersten Gehäuseteil (41) eine doppeltwirkende Kolben-Zylinder-Einheit (44, 45) umfasst, wobei ein Kolben (44A, 45A) oder ein Zylinder (44B, 45B) der Kolben-Zylinder-Einheit (44, 45) sowohl translatorisch als auch rotatorisch gegenüber dem Zylinder (44B, 45B) oder gegenüber dem Kolben (44A, 45A) bewegbar ausgeführt ist und die Kolben-Zylinder-Einheit (44,45) ein mit dem Zylinder (44B, 45B) oder dem Kolben (44A, 45A) verbundenes Spannelement (44C, 45C) aufweist, das mit zumindest einem der Bauteile (34, 38) des Getriebes (30) in Wirkverbindung bringbar ist und über das das zumindest eine Bauteil (34, 38) des Getriebes (30) gegen eine der axialen Anlageflächen (52, 54, 65) des ersten Gehäuseteils (41) drückbar ist.

5. Transfereinrichtung nach wenigstens einem der Ansprüche 1, 3 oder 4, **dadurch gekennzeichnet, dass** wenigstens ein Mittel (72) zum radialen Arretieren des Getriebes (30) im ersten Gehäuseteil (41) eine doppeltwirkende Kolben-Zylinder-Einrichtung (46) umfasst, wobei ein Kolben (46A) oder ein Zylinder (46B) der Kolben-Zylinder-Einrichtung (46) rotatorisch gegenüber dem Zylinder (46B) oder gegenüber dem Kolben (46A) bewegbar ausgeführt ist und die Kolben-Zylinder-Einrichtung (46) ein mit dem Zylinder (46B) oder mit dem Kolben (46A) verbundenes Spannelement (46C) aufweist, das mit einem Bauteil (28) des Getriebes (30) über eine Verzahnung (46C1) in Wirkverbindung bringbar ist und über das das Getriebe (30) gegen ein Haltelement (47) des ersten Gehäuseteils (41) rotatorisch vorspannbar ist, und/oder dass das Spannelement (46C) des Mittels (72) zum radialen Arretieren des Getriebes (30) im ersten Gehäuseteil (30) einen Gewindebereich (46C2) umfasst, auf den eine Spannmutter (61) aufschraubbar ist, wobei das Bauteil (28) des Getriebes (30), das mit dem Spannelement (46C) in Wirkverbindung bringbar ist, über die Spannmutter (61) axial arretierbar ist.

6. Transfereinrichtung nach einem der Ansprüche 1, 3, 4 oder 5, **dadurch gekennzeichnet, dass** wenigstens eines der Gehäuseteile (41, 42) mit wenigstens einem durchsichtigen Bereich ausgebildet ist und/oder, dass wenigstens eines der Gehäuseteile (41, 42) mit wenigstens einer verschließbaren Öffnung ausgebildet ist und zwischen den Gehäuseteilen (41, 42) zumindest eine Dichtung vorgesehen ist.

7. Transfereinrichtung nach wenigstens einem der Ansprüche 1 bis 6 **dadurch gekennzeichnet, dass** diese eine Transportbox (68) umfasst, wobei die Transportbox (68) eine Aufhängungseinrichtung bereitstellt, durch welche das an die Fixiereinrichtung angebundene Getriebe (30) nachgiebig abgestützt ist.

8. Transfereinrichtung nach Anspruch 7, **dadurch gekennzeichnet, dass** die Aufhängungseinrichtung eine Führungsmechanik umfasst, in welche ein Einsatzgehäuse (92) einsetzbar ist.

9. Transfereinrichtung nach Anspruch 8, **dadurch gekennzeichnet, dass** die Fixiereinrichtung in das Einsatzgehäuse (92) einsetzbar ist und mit dem Getriebe (30) aus dem Einsatzgehäuse (92) aushebbar ist.

10. Transfereinrichtung nach wenigstens einem der Ansprüche 1 bis 9, **dadurch gekennzeichnet, dass** zumindest das erste Gehäuseteil (41) Aufnahmebereiche aufweist, in deren Bereich Feder-Dämpfer-Einheiten (67) einenends am ersten Gehäuseteil (41) befestigbar sind, die anderenends mit einer Transporteinrichtung (68) verbindbar sind.

11. Transfereinrichtung nach wenigstens einem der Ansprüche 1 bis 10, **dadurch gekennzeichnet, dass** wenigstens eine Sensoreinheit zur Bestimmung einer Temperatur und/oder einer Luftfeuchtigkeit und/oder einer am Getriebe (30) angreifenden Beschleunigung und/oder eines Aufenthaltsortes des Getriebes (30) umfasst ist.

12. Transportbox (68) mit einer Transfereinrichtung nach wenigstens einem der Ansprüche 7 bis 9.

13. Verfahren zum Montieren eines als Planetengetriebe ausgeführten Getriebes (30), das über eine Transfereinrichtung gemäß wenigstens einem der Ansprüche 1 bis 11 bereitgestellt wird, wobei das Getriebe (30) gemeinsam mit der Fixiereinrichtung aufgegriffen wird und durch Handhabung der Fixiereinrichtung in das Flugtriebwerk (10) eingesetzt wird.

14. Verfahren zum Demontieren eines als Planetengetriebe ausgeführten Getriebes (30) aus einem Triebwerk mittels einer Transfereinrichtung gemäß wenigstens einem der Ansprüche 1 bis 12, wobei das Getriebe (30) an der Fixiereinrichtung festgelegt wird und durch Handhabung der Fixiereinrichtung aus dem Triebwerk (10) ausgehoben wird.

## Claims

1. A transfer device for handling a transmission (30) for an engine, said transmission (30) comprising a ring gear (38), planet gears (32), a planet carrier (34) and a sun gear (28), comprising:
- a fixing device (40, 41, 42) which can be coupled to the ring gear (38), the planet carrier (29) and the sun gear (28) in such a way that the transmission (30) can be transferred via the fixing device (40, 41, 42), and
- a clamping mechanism (46) which is incorporated in the fixing device (40, 41, 42), wherein
- the transmission (30) can be brought into a braced state via the clamping mechanism (46, 103), **characterized in that** the fixing device (40, 41, 42) forms a housing (40) having a first housing part (41) and at least one second housing part (42) which can be connected thereto, at least the first housing part (41) being provided with means (70, 71, 72, 47) for locking the transmission (30) in the first housing part (41) in the axial direction (x) of the first housing part (41) and for connecting at least one component (28, 32, 34, 38) of the transmission (30) to the first housing part (41) in a rotationally fixed manner, the first housing part (41) additionally having at least one assembly region via which the first housing part (41) can be handled together with the transmission (30) by means of a lifting device during assembly.

2. Transfer device according to claim 1, **characterized in that** a torque can be introduced into the sun gear (28) via the clamping mechanism (46, 103) and the engagement of the planet gears (32) in the sun gear (28) and the ring gear (38) is thereby loaded.

3. Transfer device according to claim 1, **characterized in that** at least the first housing part (41) comprises axial contact surfaces (52, 54, 65) for the components (28, 32, 34, 38) of the transmission (30).

4. Transfer device according to claim 3, **characterized in that** at least one means (70, 71) for axially locking the transmission (30) in the first housing part (41) comprises a double-acting piston-cylinder unit (44, 45), wherein a piston (44A, 45A) or a cylinder (44B, 45B) of the piston-cylinder unit (44, 45) is configured to be movable both translationally and rotationally relative to the cylinder (44B, 45B) or relative to the piston (44A, 45A), and the piston-cylinder unit (44, 45) has a clamping element (44C, 45C) which is connected to the cylinder (44B, 45B) or the piston (44A, 45A), can be brought into operative connection with at least one of the components (34, 38) of the transmission (30) and via which the at least one component (34, 38) of the transmission (30) can be pressed against one of the axial contact surfaces (52, 54, 65) of the first housing part (41).

5. Transfer device according to at least one of claims 1, 3 or 4, **characterized in that** at least one means (72) for radially locking the transmission (30) in the first housing part (41) comprises a double-acting piston-cylinder device (46), wherein a piston (46A) or a cylinder (46B) of the piston-cylinder device (46) is configured to be rotationally movable relative to the cylinder (46B) or relative to the piston (46A), and the piston-cylinder device (46) has a clamping element (46C) which is connected to the cylinder (46B) or to the piston (46A), which can be brought into operative connection with a component (28) of the transmission (30) via a toothing (46C1) and via which the transmission (30) can be rotationally pretensioned against a retaining element (47) of the first housing part (41), and/or in that the clamping element (46C) of the means (72) for radially locking the transmission (30) in the first housing part (30) comprises a threaded region (46C2) onto which a clamping nut (61) can be screwed, the component (28) of the transmission (30), which can be brought into operative connection with the clamping element (46C), being axially lockable via the clamping nut (61).

6. Transfer device according to one of claims 1, 3, 4 or 5, **characterized in that** at least one of the housing parts (41, 42) is formed with at least one transparent area and/or **in that** at least one of the housing parts (41, 42) is formed with at least one closable opening and at least one seal is provided between the housing parts (41, 42).

7. Transfer device according to at least one of claims 1 to 6, **characterized in that** it comprises a transport box (68), the transport box (68) providing a suspension device by means of which the transmission (30) connected to the fixing device is resiliently supported.

8. Transfer device according to claim 7, **characterized in that** the suspension device comprises a guide mechanism into which an insert housing (92) can be inserted.

9. Transfer device according to claim 8, **characterized in that** the fixing device can be inserted into the insert housing (92) and can be lifted out of the insert housing (92) by means of the gear (30).

10. Transfer device according to at least one of claims 1 to 9, **characterized in that** at least the first housing part (41) has receiving regions, in the region of which spring-damper units (67) can be fastened at one end to the first housing part (41) and can be connected at the other end to a transport device (68).

11. Transfer device according to at least one of claims 1 to 10, **characterized in that** at least one sensor unit for determining a temperature and/or a humidity and/or an acceleration acting on the transmission (30) and/or a location of the transmission (30) is comprised.

12. A transport box (68) comprising a transfer device according to at least one of claims 7 to 9.

13. Method for mounting a gear (30) designed as a planetary gear, which is provided via a transfer device according to at least one of claims 1 to 11, wherein the gear (30) is picked up together with the fixing device and is inserted into the aircraft engine (10) by handling the fixing device.

14. Method for dismantling a gearbox (30) designed as a planetary gearbox from an engine by means of a transfer device according to at least one of claims 1 to 12, wherein the gearbox (30) is fixed to the fixing device and is lifted out of the engine (10) by handling the fixing device.

## Revendications

1. Dispositif de transfert destiné à manipuler une transmission (30) pour un système de propulsion, dans lequel ladite transmission (30) comprend une couronne (38), des roues planétaires (32), une cage de transmission planétaire (34) et une roue solaire (28), avec :
- un dispositif de fixation (40, 41, 42), qui peut être couplé à la couronne (38), à la cage de transmission planétaire (29) et à la roue solaire (28) de telle manière que la transmission (30) peut être transférée par l'intermédiaire du dispositif de fixation (40, 41, 42), et
- un mécanisme de serrage (46), qui est intégré dans le dispositif de fixation (40, 41, 42), dans lequel
- la transmission (30) peut être amenée dans un état assemblé par serrage par l'intermédiaire du mécanisme de serrage (46, 103), **caractérisé en ce que** le dispositif de fixation (40, 41, 42) forme un boîtier (40), avec une première partie de boîtier (41) et au moins une deuxième partie de boîtier (42) pouvant être reliée à celle-ci, dans lequel au moins la première partie de boîtier (41) est réalisée avec des moyens (70, 71, 72, 47) destinés à arrêter la transmission (30) dans la première partie de boîtier (41) dans la direction axiale (x) de la première partie de boîtier (41) et destinés à relier de manière solidaire en rotation au moins un composant (28, 32, 34, 38) de la transmission (30) à la première partie de boîtier (41), dans lequel la première partie de boîtier (41) présente en supplément au moins une zone de montage, par l'intermédiaire de laquelle la première partie de boîtier (41) peut être manipulée au moyen d'un dispositif de levage conjointement avec la transmission (30) au cours d'un montage.

2. Dispositif de transfert selon la revendication 1, **caractérisé en ce qu'**un couple de rotation peut être appliqué dans la roue solaire (28) par l'intermédiaire du mécanisme de serrage (46, 103) et la prise des roues planétaires (32) avec la roue solaire (28) et la couronne (38) est ainsi soumise à une contrainte.

3. Dispositif de transfert selon la revendication 1, **caractérisé en ce qu'**au moins la première partie de boîtier (41) comprend des surfaces d'appui axiales (52, 54, 65) pour les composants (28, 32, 34, 38) de la transmission (30).

4. Dispositif de transfert selon la revendication 3, **caractérisé en ce qu'**au moins un moyen (70, 71) destiné à arrêter axialement la transmission (30) dans la première partie de boîtier (41) comprend une unité piston-cylindre (44, 45) à double action, dans lequel un piston (44A, 45A) ou un cylindre (44B, 45B) de l'unité piston-cylindre (44, 45) est réalisé de manière à pouvoir être déplacé à la fois par translation et par rotation par rapport au cylindre (44B, 45B) ou par rapport au piston (44A, 45A) et l'unité piston-cylindre (44, 45) présente un élément de serrage (44C, 45C) relié au cylindre (44B, 45B) ou au piston (44A, 45A), qui peut être amené en liaison fonctionnelle avec au moins un des composants (34, 38) de la transmission (30) et peut être comprimé contre une des surfaces d'appui axiales (52, 54, 65) de la première partie de boîtier (41) par l'intermédiaire de l'au moins un composant (34, 38) de la transmission (30).

5. Dispositif de transfert selon au moins l'une quelconque des revendications 1, 3 ou 4, **caractérisé en ce qu'**au moins un moyen (72) destiné à arrêter radialement la transmission (30) dans la première partie de boîtier (41) comprend un système piston-cylindre (46) à double action, dans lequel un piston (46A) ou un cylindre (46B) du système piston-cylindre (46) est réalisé de manière à pouvoir être déplacé par rotation par rapport au cylindre (46B) ou par rapport au piston (46A) et le système piston-cylindre (46) présente un élément de serrage (46C) relié au cylindre (46B) ou au piston (46A), qui peut être amené en liaison fonctionnelle avec un composant (28) de la transmission (30) par l'intermédiaire d'une denture (46C1) et par l'intermédiaire duquel la transmission (30) peut être précontrainte par rotation contre un élément de maintien (47) de la première partie de boîtier (41), et/ou que l'élément de serrage (46C) du moyen (72) destiné à arrêter radialement la transmission (30) dans la première partie de boîtier (30) comprend une zone filetée (46C2), sur laquelle un écrou de serrage (61) peut être vissé, dans lequel le composant (28) de la transmission (30), qui peut être amené en liaison fonctionnelle avec l'élément de serrage (46C), peut être arrêté axialement par l'intermédiaire de l'écrou de serrage (61).

6. Dispositif de transfert selon l'une quelconque des revendications 1, 3, 4 ou 5, **caractérisé en ce qu'**au moins une des parties de boîtier (41, 42) est réalisée avec au moins une zone transparente et/ou qu'au moins une des parties de boîtier (41, 42) est réalisée avec au moins une ouverture pouvant être fermée et au moins un joint d'étanchéité est prévu entre les parties de boîtier (41, 42).

7. Dispositif de transfert selon au moins l'une quelconque des revendications 1 à 6, **caractérisé en ce que** celui-ci comprend une boîte de transport (68), dans lequel la boîte de transport (68) fournit un dispositif de suspension, par lequel la transmission (30) attachée au dispositif de fixation est soutenue de manière souple.

8. Dispositif de transfert selon la revendication 7, **caractérisé en ce que** le dispositif de suspension comprend un mécanisme de guidage, dans lequel un boîtier d'insert (92) peut être inséré.

9. Dispositif de transfert selon la revendication 8, **caractérisé en ce que** le dispositif de fixation peut être inséré dans le boîtier d'insert (92) et peut être enlevé hors du boîtier d'insert (92) avec la transmission (30).

10. Dispositif de transfert selon au moins l'une quelconque des revendications 1 à 9, **caractérisé en ce qu'**au moins la première partie de boîtier (41) présente des zones de réception, dans la zone desquelles des unités de ressort-amortisseur (67) peuvent être fixées sur une extrémité sur la première partie de boîtier (41), qui peuvent être reliées sur l'autre extrémité à un dispositif de transport (68).

11. Dispositif de transfert selon au moins l'une quelconque des revendications 1 à 10, **caractérisé en ce qu'**est comprise au moins une unité de capteur destinée à définir une température et/ou une humidité de l'air et/ou une accélération s'engageant sur la transmission (30) et/ou un emplacement de séjour de la transmission (30).

12. Boîte de transport (68) avec un dispositif de transfert selon au moins l'une quelconque des revendications 7 à 9.

13. Procédé de montage d'une transmission (30) réalisée en tant qu'engrenage planétaire, qui est fournie par l'intermédiaire d'un dispositif de transfert selon au moins l'une quelconque des revendications 1 à 11, dans lequel la transmission (30) est reprise conjointement avec le dispositif de fixation et est insérée dans le réacteur (10) par manipulation du dispositif de fixation.

14. Procédé de démontage d'une transmission (30) réalisée en tant qu'engrenage planétaire hors d'un système de propulsion au moyen d'un dispositif de transfert selon au moins l'une quelconque des revendications 1 à 12, dans lequel la transmission (30) est placée fixement sur le dispositif de fixation et est enlevée du mécanisme de propulsion (10) par manipulation du dispositif de fixation.
